# EUROPEAN PATENT APPLICATION

(11) **EP 4 115 722 A1**
(43) Date of publication of application: **11.01.2023**
(21) Application number: 22179074.4
(22) Date of filing: 15.06.2022
(51) Int. Cl.: A01D 34/66

(54) **A DISC MOWER HAVING INDEPENDENTLY CONTROLLABLE CUTTER ASSEMBLIES**

(30) Priority: 08.07.2021 US 202117305456
(71) Applicant: Deere & Company, Moline, IL 61265 (US)
(72) Inventor: ROTH, DARIN L, 68163 Mannheim (DE); TACKE, KEVIN M, 68163 Mannheim (DE); GRAEVE, JOSHUA D, 68163 Mannheim (DE)
(74) Representative: Stein, Stefan

(57) **Abstract**

A disc mower for cutting crop material includes a plurality of cutter assemblies attached to a frame. Each of the cutter assemblies includes a respective motor operatively attached to a respective disc for rotating the disc. A cutter controller is operatively coupled to the respective motor of each of the plurality of cutter assemblies for selectively controlling a respective commanded rotational speed of the respective motor of one of the cutter assemblies independently of the respective commanded rotational speed of the respective motor of another of the cutter assemblies. Each of the individual cutter assemblies may be vertically moveable relative to the frame independently of the other of the cutter assemblies.

## Description

### TECHNICAL FIELD

The disclosure generally relates to a disc mower for cutting crop material, and a method of controlling a disc mower.

### BACKGROUND

Many types of crop materials are harvested by cutting or mowing the crop material in the field. The are several different configurations of implements that may be used for cutting crop material. One cutting implement configuration includes a disc mower having a plurality of individual cutting modules. Each cutting module includes a respective disc that carries one or more knives for cutting the crop material. The cutting modules are generally aligned in a row transverse or perpendicular to a direction of travel while harvesting the crop material. The cutting modules are attached together with structural connections and mechanical interfaces to form a cutter-bar. Power is provided at an end of the cutter-bar and is transmitted along the cutter-bar, between adjacent cutting modules, via mechanical interfaces and/or a power transfer system. For example, the adjacent cutting modules may be connected via a gear drive or other similar power transfer system. In this configuration, the power for all of the cutting modules is transferred between the cutting modules by the power transfer system that links the cutting modules together. Additionally, because the cutting modules are linked together by the power transfer system, the ability of the cutter modules to move relative to each other is prevented and/or extremely limited.

### SUMMARY

A disc mower for cutting crop material is provided. The disc mower includes a frame configured for attachment to a work vehicle, and a plurality of cutter assemblies attached to the frame. Each of the cutter assemblies includes a respective motor operatively attached to a respective disc for rotating the disc. A cutter controller is operatively coupled to the respective motor of each of the plurality of cutter assemblies. The cutter controller is operable to selectively control a respective commanded rotational speed of the respective motor of one of the plurality of cutter assemblies independently of the respective commanded rotational speed of the respective motor of another of the plurality of cutter assemblies.

In one aspect of the disclosure, the motor of each of the plurality of cutter assemblies may include one of an electric motor or a hydraulic motor. In one implementation, the motor of each of the plurality of cutter assemblies is an axial flux magnetic motor.

In one aspect of the disclosure, each of the plurality of cutter assemblies may be moveable along a respective vertical axis relative to the frame and relative to the other of the plurality of cutter assemblies. In one implementation, each of the cutter assemblies includes a respective assembly attachment interconnecting the respective cutter assembly and the frame. The assembly attachment is operable to move the respective cutter assembly along its respective vertical ais relative to the frame. In another implementation, each of the cutter assemblies includes a respective actuator that is operable to move the respective cutter assembly along its respective vertical axis relative to the frame.

In one aspect of the disclosure, each of the plurality of cutter assemblies includes a respective support structure supporting the respective motor. In one implementation, each of the cutter assemblies includes a respective electrical bus secured to the support structure. The electrical bus is coupled to both the motor of the respective cutter assembly and the cutter controller.

In one implementation, the respective motor of each of the cutter assemblies includes a stator attached to the respective support structure. The respective motor may further include a rotor rotatably coupled to the respective support structure for rotation relative to the respective stator and about a respective disc rotation axis. In one implementation, the respective rotor of each of the plurality of cutter assemblies includes a first rotor portion disposed adjacent to a first axial end of the respective stator along the respective disc rotation axis, and a second rotor portion disposed adjacent to a second axial end of the respective stator along the respective disc rotation axis.

In one aspect of the disclosure, each of the cutter assemblies includes a respective output shaft coupled to and rotatable with the respective motor. In one implementation, the output shaft is coupled to a rotor of an electric motor. A center of the output shaft defines the disc rotation axis. The respective disc is attached to the output shaft.

In one aspect of the disclosure, the cutter controller includes a processor and a memory having a cutter control algorithm stored thereon. The cutter controller is operable to automatically adjust the respective commanded rotational speed of each respective motor of the cutter assemblies based on an operating condition of one of the plurality of cutter assemblies. The operating condition may include, but is not limited to, a volume of crop material being cut, a ground speed of the cutter assembly, a ground speed of the cutter assembly relative to one or more cutter assemblies, a current steering maneuver/operation of the disc mower, etc.

In one aspect of the disclosure, the disc mower may include a sensor that is disposed in communication with the cutter controller. The sensor may be operable to sense data related to the operating condition of one or more of the cutter assemblies. The sensor may further communicate the sensed data to the cutter controller so that the cutter controller may adjust the respective commanded rotational speed of the respective motor of one or more of the cutter assemblies.

A method of controlling a disc mower is also provided. The method includes cutting crop material in a field with a disc mower having a plurality of cutter assemblies attached to a frame. Each of the plurality of cutter assemblies has a respective motor that is operatively attached to a respective disc for rotating the disc. A respective control signal for each of the cutter assemblies is generated with a cutter controller. The respective control signal is operable to control a commanded rotational speed of the respective motor of each of the cutter assemblies. The respective control signal for one of the cutter assemblies is different than the respective control signal for another one of the cutter assemblies, such that the commanded rotational speed of the different cutter assemblies are independently controllable.

In one implementation of the disclosure, the method of controlling the disc mower includes receiving a user input with an input device of the cutter controller. The user input defines the commanded rotational speed of the respective motor of the one of the plurality of cutter assemblies. The input device may include, but is not limited to, a touch screen display. An operator may enter the user input into the input device to manually control or adjust the commanded rotational speed of one of the cutter assemblies relative to another one of the cutter assemblies.

In one implementation of the disclosure, the method of controlling the disc mower includes sensing data related to an operating condition of one of the cutter assemblies with a sensor. The sensed data is then communicated to the cutter controller. The cutter controller may define the commanded rotational speed of the respective motor of each of the plurality of cutter assemblies based on the sensed data related to the operating condition of the one of the plurality of cutter assemblies.

In one aspect of the disclosure, the method of controlling the disc mower may include adjusting a vertical position of one of the cutter assemblies relative to the frame and the other of the plurality of cutter assemblies. The vertical height of the cutter assemblies may be adjusted manually and/or automatically. For example, the cutter assemblies may be attached to the frame with an attachment connection that enables free vertical movement. In so doing, each individual cutter assembly may track or follow a ground profile. Alternatively, the vertical height of each of the cutter assemblies may be automatically controlled by the cutter controller. For example, the cutter controller may sense or obtain data related to the ground profile, and actively control the height of the individual cutter assemblies to follow or track the ground profile.

Accordingly, the disc mower described herein, including the individually powered cutter assemblies, enables the rotational speed of each respective disc to be controlled to values different than the other discs of the other cutter assemblies. As such, the disc mower may be controlled to provide even, consistent cutting during steering maneuvers in which an outer turning end is travelling faster than an inner turning end. Similarly, if one of the cutter assemblies is engaged with more crop material, it may be controlled differently than the other cutter assemblies to maintain consistent cutting across the width of the disc mower. Additionally, because each of the cutter assemblies is individually powered, the individual cutter assemblies may be moved vertically relative to each other because power is not transferred between adjacent cutter assemblies. This enables the disc mower to more closely track and follow the contours of the ground surface, thereby maintaining a consistent cut height above the ground surface. Furthermore, the individual cutter assemblies may be disengaged when not actively cutting crop material, such as when overrunning a previously cut row, thereby reducing power and energy consumption.

The above features and advantages and other features and advantages of the present teachings are readily apparent from the following detailed description of the best modes for carrying out the teachings when taken in connection with the accompanying drawings.

### BRIEF DESCRIPTION OF THE DRAWINGS

FIG. 1 is a schematic plan view of a work vehicle including a disc mower traversing a field.
FIG. 2 is a schematic perspective cross sectional view of a cutter assembly of the disc mower.
FIG. 3 is a schematic profile view of the work vehicle including the disc mower traversing an uneven ground surface of the field.

### DETAILED DESCRIPTION

Those having ordinary skill in the art will recognize that terms such as "above," "below," "upward," "downward," "top," "bottom," etc., are used descriptively for the figures, and do not represent limitations on the scope of the disclosure, as defined by the appended claims. Furthermore, the teachings may be described herein in terms of functional and/or logical block components and/or various processing steps. It should be realized that such block components may be comprised of any number of hardware, software, and/or firmware components configured to perform the specified functions.

Terms of degree, such as "generally", "substantially" or "approximately" are understood by those of ordinary skill to refer to reasonable ranges outside of a given value or orientation, for example, general tolerances or positional relationships associated with manufacturing, assembly, and use of the described embodiments.

Referring to the Figures, wherein like numerals indicate like parts throughout the several views, a disc mower is generally shown at 20. The disc mower 20 is configured for cutting crop material 22. The crop material 22 may include, but is not limited to, grasses and other small stem crops. The disc mower 20 may be configured to mount to a work vehicle 24. For example, in one implementation, the disc mower 20 may be configured to mount to a forward end of a self-propelled windrow 26er. However, in other implementations, the disc mower 20 may be configured to mount to the forward or rearward end of an agricultural tractor. It should be appreciated that the teachings of this disclosure may be applied to other platforms and/or cutting implements.

In the example implementation shown in the Figures and described herein, the disc mower 20 is operable to mow or cut standing crop material 22 in the field and position the cut crop material 22 in a windrow 26 or swath. Additionally, the disc mower 20 may be equipped with a crop conditioner (not shown) that is operable to process the cut crop material 22 as the crop material 22 moves through the disc mower 20 to improve drying characteristics of the crop material 22.

The disc mower 20 includes a frame 28. The frame 28 extends along a central longitudinal axis 30 between a forward end and a rearward end, relative to a direction of travel 32 during operation. The frame 28 may include, but is not limited to, the various members, panels, supports, braces, beams, etc., necessary to support the various components and systems of the disc mower 20 as described below. In one embodiment, the frame 28 may be attached to a forward end of the work vehicle 24. In other embodiments, the frame 28 may be attached to the work vehicle 24 with a drawbar and drawn behind the work vehicle 24.

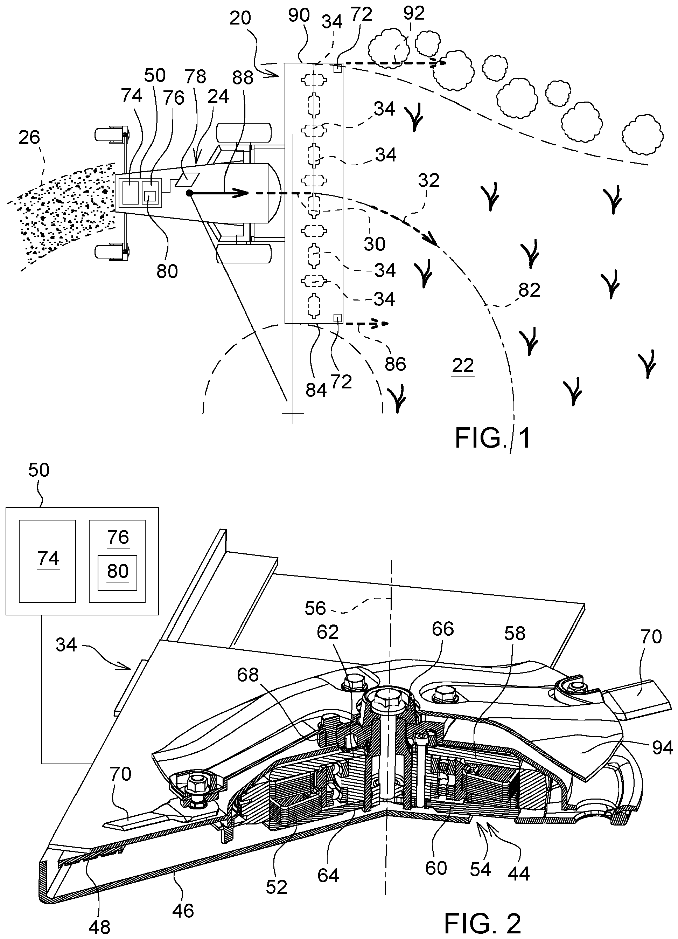

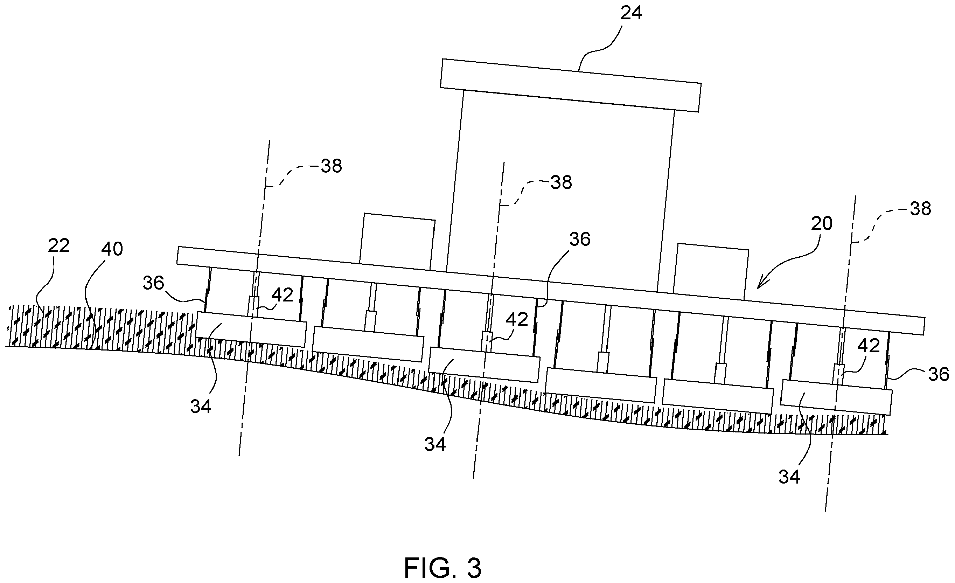

A plurality of cutter assemblies 34 are attached to the frame 28. Referring to FIGS. 1 and 3, the cutter assemblies 34 are generally aligned in row extending generally perpendicular to the central longitudinal axis 30. Each of the individual cutter assemblies 34 includes a respective assembly attachment 36 interconnecting the respective cutter assembly 34 and the frame 28. The respective assembly attachment 36 of each of the cutter assemblies 34 may be configured to move the respective cutter assembly 34 along a respective vertical axis 38 relative to the frame 28 and relative to the other of the plurality of cutter assemblies 34. As such, because each of the individual cutter assemblies 34 is attached to the frame 28 by their respective assembly attachment 36, each of the cutter assemblies 34 may move vertically independent of the other cutter assemblies 34. In this manner, each of the cutter assemblies 34 may track or follow a contour or profile of a ground surface 40 of the field independent of the other cutter assemblies 34 as the disc mower 20 moves across the field.

The respective assembly attachment 36 of each of the cutter assemblies 34 may be configured in a manner that is operable to move or allow movement of the respective cutter assembly 34 along its respective vertical axis 38 relative to the frame 28. For example, the assembly attachment 36 may include a pivoting and/or linked connection, a sliding connection, or some other system capable of securing the respective cutter assembly 34 to the frame 28 and allowing relative movement between the cutter assembly 34 and the frame 28.

The respective assembly attachment 36 of each of the cutter assemblies 34 may include a respective actuator 42 that is operable to actively move the respective cutter assembly 34 along its respective vertical axis 38 relative to the frame 28. For example, the actuator 42 may include, but is not limited to, a rotary motor, a linear motor, a linear hydraulic actuator, a linear electric actuator, or some other device actively controllable that enables or provides vertical movement of the respective cutter assembly 34 relative to the frame 28. It should be appreciated that the assembly attachment 36 may include a combination of components, including but not limited to, links ,connectors, pivots, slides, actuator 42s, etc., to provide the described vertical movement.

Each of the plurality of cutter assemblies 34 includes a respective motor 44 that is operatively attached to a respective disc 94. The motor 44 is operable to generate torque for rotating the disc 94 attached thereto. The motor 44 may include a device capable of generating torque. For example, the motor 44 of each of the cutter assemblies 34 may include but is not limited to one of an electric motor 44 or a hydraulic motor 44. In one implementation, the motor 44 of each of the cutter assemblies 34 is an electric motor 44, and more specifically an axial flux magnetic motor 44. However, it should be appreciated that other types and configurations of electric motor 44s may be implemented in accordance with the disclosure.

Referring to FIG. 2, an example implementation of one of the cutter assemblies 34 is shown. The example implementation of the cutter assembly 34 shown in FIG. 2 includes the motor 44 configured as an axial flux magnetic motor 44. As shown in FIG. 2, the cutter assembly 34 includes a respective support structure 46 supporting the respective motor 44. The support structure 46 may be shaped and/or configured to support the various components of the cutter assembly 34, and for attachment to the frame 28, either directly or indirectly via one or more other components. The support structure 46 may be assembled or formed from rigid components that provide a frame 28work for the respective cutter assembly 34. Notably, the support structure 46 of each of the cutter assemblies 34 is attached to the frame 28 and need not be attached to any of the other cutter assemblies 34 for support and/or to transfer power and torque therebetween. However, in some embodiments, adjacent pairs of the cutter assemblies 34 may be coupled together in a manner that allows relative vertical movement therebetween, such as but not limited to a vertical sliding connection capable of providing lateral support and support in a fore/aft direction between adjacent cutter assemblies 34 while enabling relative vertical movement between the adjacent cutter assemblies 34.

In the example implementation shown in FIG. 2 and described herein, each of the cutter assemblies 34 includes a respective electrical bus 48 secured to the support structure 46. The respective electrical bus 48 of each of the cutter assemblies 34 is coupled to both the motor 44 of the respective cutter assembly 34 and a cutter controller 50. The electrical bus 48 may include the connections to connect the motor 44 to the cutter controller 50 and/or supply electrical power to the motor 44 to generate torque. The electrical bus 48 may be configured in a suitable manner understood by those skilled in the art for making the required electrical connections.

In the example implementation shown in the Figures and described herein, the respective motor 44 of each of the cutter assemblies 34 includes a stator 52 and an associated rotor 54. The stator 52 is attached to the respective support structure 46. As is understood by those skilled in the art, the stator 52 is stationary relative to the support structure 46 and the rotor 54 is rotatably coupled to the respective support structure 46 for rotation relative to the respective stator 52 and about a respective disc rotation axis 56. The stator 52 interacts with the rotor 54 to generate a rotating magnetic field that drives or rotates the rotor 54. The specific construction and operation of the stator 52 and rotor 54 are understood by those skilled in the art and are therefore not described in detail herein.

In the example implementation shown in the FIG. 2 and described herein, the respective rotor 54 of each of the cutter assemblies 34 includes a first rotor portion 58 and a second rotor portion 60. The first rotor portion 58 is disposed adjacent to a first axial end 62 of the respective stator 52 along the respective disc rotation axis 56. The first axial end 62 may be considered an uppermost axial end that is disposed vertically above the stator 52 along the respective disc rotation axis 56. The second rotor portion 60 is disposed adjacent to a second axial end 64 of the respective stator 52 along the respective disc rotation axis 56. The second axial end 64 may be considered a lowermost axial end that is disposed vertically beneath or below the stator 52 along the respective disc rotation axis 56.

Each of the cutter assemblies 34 includes a respective output shaft 66 that is coupled to and rotatable with the respective rotor 54. A center of the output shaft 66 defines the respective disc rotation axis 56. The respective disc 94 of the respective cutter assembly 34 is attached to the output shaft 66, either directly or via a disc carrier 68, such as shown. One or more knives 70 are attached to an outer periphery of the disc 94 as is understood by those skilled in the art.

The disc mower 20 may further includes a sensor 72. The sensor 72 may include a plurality of sensors 72. The sensor 72 may be positioned on the disc mower 20, or may be positioned remote from the disc mower 20, such as on the associated work vehicle 24. The sensor 72 is disposed in communication with the cutter controller 50 and is operable to sense data related to an operating condition of one or more of the cutter assemblies 34, and communicate the sensed data to the cutter controller 50. The sensor 72 may be configured to sense data related to, but not limited to, a ground speed of one or more of the cutter assemblies 34, a mass flow rate of crop material 22 currently being cut by one or more of the cutter assemblies 34, an vertical elevation above the ground surface 40 of one or more of the cutter assemblies 34, an edge of uncut crop material 22 relative to the cutter assemblies 34, etc. The sensor 72 may include a device configured for the specific type of data being sensed. For example, the sensor 72 may include, but is not limited to, a camera, a speed sensor 72, a distance sensor 72, combinations of sensors 72, etc.

As described above, the example implementation of the cutter assemblies 34 are coupled to and in communication with the cutter controller 50. The cutter controller 50 is disposed in communication with the motor 44. The cutter controller 50 may be configured to generate a respective control signal to selectively control a respective commanded rotational speed or torque of the respective motor 44 of each of the cutter assemblies 34. More specifically, the cutter controller 50 is operatively coupled to the respective motor 44 of each of the cutter assemblies 34 and is operable to selectively control a respective commanded rotational speed or torque of the respective motor 44 of one of the plurality of cutter assemblies 34 independently of the respective commanded rotational speed or torque of the respective motor 44 of another of the plurality of cutter assemblies 34.

While the cutter controller 50 is generally described herein as a singular device, it should be appreciated that the cutter controller 50 may include multiple devices linked together to share and/or communicate information therebetween. Furthermore, it should be appreciated that the cutter controller 50 may be located on the disc mower 20 or located remotely from the disc mower 20, such as on the work vehicle 24.

The cutter controller 50 may alternatively be referred to as a computing device, a computer, a controller, a control unit, a control module, a module, etc. The cutter controller 50 includes a processor 74, a memory 76, and all software, hardware, algorithms, connections, sensors 72, etc., necessary to manage and control the operation of the cutter assemblies 34. As such, a method may be embodied as a program or algorithm operable on the cutter controller 50. It should be appreciated that the cutter controller 50 may include any device capable of analyzing data from various sensors 72, comparing data, making decisions, and executing the required tasks.

As used herein, "cutter controller 50" is intended to be used consistent with how the term "controller" or "computing device" may be used by a person of skill in the art, and refers to a computing component with processing, memory 76, and communication capabilities, which is utilized to execute instructions (i.e., stored on the memory 76 or received via the communication capabilities) to control or communicate with one or more other components. In certain embodiments, the cutter controller 50 may be configured to receive input signals in various formats (e.g., hydraulic signals, voltage signals, current signals, CAN messages, optical signals, radio signals), and to output command or communication signals in various formats (e.g., hydraulic signals, voltage signals, current signals, CAN messages, optical signals, radio signals).

The cutter controller 50 may be in communication with other components on the disc mower 20, such as hydraulic components, electrical components, an operator input device 78 within an operator station of the associated work vehicle 24, etc. The cutter controller 50 may be electrically connected to these other components by a wiring harness such that messages, commands, and electrical power may be transmitted between the cutter controller 50 and the other components. Although the cutter controller 50 is referenced in the singular, in alternative embodiments the configuration and functionality described herein can be split across multiple devices using techniques known to a person of ordinary skill in the art.

The cutter controller 50 may be embodied as one or multiple digital computers or host machines each having one or more processor 74s, read only memory 76 (ROM), random access memory 76 (RAM), electrically-programmable read only memory 76 (EPROM), optical drives, magnetic drives, etc., a high-speed clock, analog-to-digital (A/D) circuitry, digital-to-analog (D/A) circuitry, and any required input/output (I/O) circuitry, I/O devices, and communication interfaces, as well as signal conditioning and buffer electronics.

The computer-readable memory 76 may include any non-transitory/tangible medium which participates in providing data or computer-readable instructions. The memory 76 may be non-volatile or volatile. Non-volatile media may include, for example, optical or magnetic disks and other persistent memory 76. Example volatile media may include dynamic random access memory 76 (DRAM), which may constitute a main memory 76. Other examples of embodiments for memory 76 include a floppy, flexible disk, or hard disk, magnetic tape or other magnetic medium, a CD-ROM, DVD, and/or any other optical medium, as well as other possible memory 76 devices such as flash memory 76.

The cutter controller 50 includes the tangible, non-transitory memory 76 on which are recorded computer-executable instructions, including a cutter control algorithm 80. The processor 74 of the cutter controller 50 is configured for executing the cutter control algorithm 80. The cutter control algorithm 80 implements a method of controlling the disc mower 20, described in detail below.

Referring to FIG. 1, the method of controlling the disc mower 20 includes cutting crop material 22 in a field with the disc mower 20. As understood by those skilled in the art, the crop material 22 is cut by moving the disc mower 20 through the field while rotating the disc 94 with the respective motor 44 of the cutter assemblies 34. As the crop material 22 is cut, the crop material 22 may be formed into the windrow 26 on the ground surface 40 behind the disc mower 20, or may be loaded into a container, such as a trailer.

FIG. 1 shows the disc mower 20 moving along a curved travel path 82. The turning maneuver depicted causes an inner turn end 84 of the disc mower 20 to travel at an inner ground speed 86 and causes an outer turn end 90 of the disc mower 20 to travel at an outer ground speed 92. Relative to the ground speed 88 of the work vehicle 24, the inner ground speed 86 is reduced during the turn, whereas the outer ground speed 92 is increased. The increased outer ground speed 92 of the outer turn end 90 of the disc mower 20 causes the cutter assemblies 34 located toward the outer turn end 90 of the disc mower 20 to cut an increased amount of crop material 22, i.e., an increased mass flow rate through the cutter assemblies 34 located near the outer turn end 90. The increased mass flow may cause these cutter assemblies 34 to clog and/or reduce the cut quality. Because the inner ground speed 86 of the cutter assemblies 34 located near the inner turn end 84 of the disc mower 20 is decreased during the turn maneuver, the mass flow rate through the cutter assemblies 34 located near the inner turn end 84 of the disc mower 20 is decreased, and they do not suffer from reduced cut quality and are not likely to clog.

In order to avoid the reduced cut quality from the cutter assemblies 34 located near the outer turn end 90 during the turn maneuver, while maintaining the ground speed 88 of the work vehicle 24, the rotational speed and/or torque applied to the cutter assemblies 34 located near the outer turn end 90 of the disc mower 20 may be increased during the turn maneuver. The rotational speed of the individual cutter assemblies 34 may be manually controlled by the operator or may be automatically controlled by the cutter controller 50.

The method described herein may include sensing data related to an operating condition of one or more of the cutter assemblies 34 with the sensor 72. The sensed data may then be communicated to the cutter controller 50. As described above, the data may relate to, but is not limited to, a ground speed 88 of one or more of the cutter assemblies 34, a mass flow rate of crop material 22 currently being cut by one or more of the cutter assemblies 34, an vertical elevation above the ground surface 40 of one or more of the cutter assemblies 34, an edge of uncut crop material 22 relative to the cutter assemblies 34, etc.

In one implementation, the sensed data may be communicated to the operator, who may then manually enter a user input into the cutter controller 50 defining the commanded rotational speed for one or more of the cutter assemblies 34. The user input may be entered with the input device 78, such as but not limited to a touchscreen display, keyboard, voice recognition, etc. The cutter controller 50 is configured to receive the user input from the input device 78, and then generates a respective control signal for one or more of the cutter assemblies 34 to control the commanded rotational speed of the respective motor 44 of the cutter assemblies 34.

In another implementation, the cutter controller 50 may automatically control the rotational speed of the individual cutter assemblies 34. For example, the cutter assembly 34 may receive the sensed data from the sensor 72 related to the operating condition of one or more of the cutter assemblies 34, and then use the sensed data to define the commanded rotational speed of the respective motor 44 of one or more of the plurality of cutter assemblies 34.

Once the commanded rotational speeds for the individual cutter assemblies 34 have been defined, the cutter controller 50 may then generate the respective control signal for each of the cutter assemblies 34 to control the commanded rotational speed of the respective motor 44 of each of the cutter assemblies 34. As described above, the respective control signal for one of the cutter assemblies 34 may be defined to be different than the respective control signal for another one or the remaining cutter assemblies 34. In the example shown in FIG. 1, the cutter controller 50 may define the respective commanded rotational speed for each respective motor 44 of each of the cutter assemblies 34 to include different rotational speeds. For example, the commanded rotational speeds of the cutter assemblies 34 located near the inner turn of the disc mower 20 may be defined to be lower, with the commanded rotational speeds increasing with movement across the width of the disc mower 20 toward the outer turn end 90 of the disc mower 20. By so doing, the cutter assemblies 34 located near the outer turn end 90 of the disc mower 20 may rotate faster, enabling more crop material 22 to be cut to compensate for the increased outer ground speed 92 resulting from the turn maneuver.

It should be appreciated that the cutter controller 50 may control the rotational speed of the respective motor 44 and/or the torque generated by the respective motor 44 of each of the cutter assemblies 34 for several different operating situations other than the example turn maneuver described above. For example, one or more cutter assemblies 34 may be completely disengaged when they are located outside a standing or uncut crop edge. Additionally, the rotational speed and/or torque of the cutter assemblies 34 may be increased or decreased based on the volume of crop each is currently processing, such as due to variable crop density in the field.

Because the cutter assemblies 34 are individually powered by their respective motor 44, the plurality of cutter assemblies 34 may be secured together and/or to the frame 28 in a manner that allows vertical adjustment relative to each other. As such, the method may include adjusting a vertical position of one of the cutter assemblies 34 relative to the frame 28 and the other of the cutter assemblies 34 as the disc mower 20 moves across the field.

Referring to FIG. 3, the disc mower 20 is shown traversing an uneven ground surface 40. The respective attachment connection of each of the cutter assemblies 34 enables each respective cutter assembly 34 to automatically follow the contour of the ground surface 40. Alternatively, if the cutter assemblies 34 are equipped with a respective actuator 42, the disc mower 20 may be equipped with a sensor 72 that detects data related to the elevation of the ground surface 40, and communicate the elevation data to the cutter controller 50. The cutter controller 50 may than actively control the respective actuator 42 of each cutter assembly 34 to a desired elevation relative to the ground surface 40, such that the height of each of the cutter assemblies 34 may be controlled to a desired vertical position relative to the other cutter assemblies 34, without having to track or follow the contour of the ground surface 40.

As used herein, "e.g." is utilized to non-exhaustively list examples, and carries the same meaning as alternative illustrative phrases such as "including," "including, but not limited to," and "including without limitation." As used herein, unless otherwise limited or modified, lists with elements that are separated by conjunctive terms (e.g., "and") and that are also preceded by the phrase "one or more of," "at least one of," "at least," or a like phrase, indicate configurations or arrangements that potentially include individual elements of the list, or any combination thereof. For example, "at least one of A, B, and C" and "one or more of A, B, and C" each indicate the possibility of only A, only B, only C, or any combination of two or more of A, B, and C (A and B; A and C; B and C; or A, B, and C). As used herein, the singular forms "a", "an" and "the" are intended to include the plural forms as well, unless the context clearly indicates otherwise. Further, "comprises," "includes," and like phrases are intended to specify the presence of stated features, steps, operations, elements, and/or components, but do not preclude the presence or addition of one or more other features, steps, operations, elements, components, and/or groups thereof.

The detailed description and the drawings or figures are supportive and descriptive of the disclosure, but the scope of the disclosure is defined solely by the claims. While some of the best modes and other embodiments for carrying out the claimed teachings have been described in detail, various alternative designs and embodiments exist for practicing the disclosure defined in the appended claims.

## Claims

1. A disc mower for cutting crop material (22), the disc mower (20) comprising:
a frame (28) configured for attachment to a work vehicle (24);
a plurality of cutter assemblies (34) attached to the frame (28), wherein each of the plurality of cutter assemblies (34) includes a respective motor (44) operatively attached to a respective disc (94) for rotating the disc (94); and
a cutter controller (50) operatively coupled to the respective motor (44) of each of the plurality of cutter assemblies (34) and operable to selectively control a respective commanded rotational speed of the respective motor (44) of one of the plurality of cutter assemblies (34) independently of the respective commanded rotational speed of the respective motor (44) of another of the plurality of cutter assemblies (34).

2. The disc mower set forth in claim 1, wherein each of the plurality of cutter assemblies (34) is moveable along a respective vertical axis (38) relative to the frame (28) and relative to the other of the plurality of cutter assemblies (34).

3. The disc mower set forth in claim 1 or 2, wherein each of the plurality of cutter assemblies (34) includes a respective assembly attachment (36) interconnecting the respective cutter assembly (34) and the frame (28) and operable to move the respective cutter assembly (34) along its respective vertical axis relative to the frame (28).

4. The disc mower according to at least one of the preceding claims, wherein each of the plurality of cutter assemblies (34) includes a respective actuator (42) operable to move the respective cutter assembly (34) along its respective vertical axis (38) relative to the frame (28).

5. The disc mower according to at least one of the preceding claims, wherein each of the plurality of cutter assemblies (34) includes a respective support structure (46) supporting the respective motor (44).

6. The disc mower according to at least one of the preceding claims, wherein each of the plurality of cutter assemblies (34) includes a respective electrical bus (48) secured to the support structure (46) and coupled to both the motor (44) of the respective cutter assembly (34) and the cutter controller (50).

7. The disc mower according to at least one of the preceding claims, wherein the respective motor (44) of each of the plurality of cutter assemblies (34) includes a stator (52) attached to the respective support structure (46).

8. The disc mower according to at least one of the preceding claims, wherein the respective motor (44) of each of the plurality of cutter assemblies (34) includes a rotor (54) rotatably coupled to the respective support structure (46) for rotation relative to the respective stator (52) and about a respective disc rotation axis (56).

9. The disc mower according to at least one of the preceding claims, wherein the cutter controller (50) includes a processor (74) and a memory (76) having a cutter control algorithm (80) stored thereon, wherein the cutter controller (50) is operable to automatically adjust the respective commanded rotational speed of each respective motor (44) of the plurality of cutter assemblies (34) based on an operating condition of one of the plurality of cutter assemblies (34).

10. The disc mower according to at least one of the preceding claims, further comprising a sensor (72) in communication with the cutter controller (50) and operable to sense data related to the operating condition of the one of the plurality of cutter assemblies (34), and communicate the sensed data to the cutter controller (50).

11. A method of controlling a disc mower, the method comprising:
cutting crop material (22) in a field with a disc mower (20) having a plurality of cutter assemblies (34) attached to a frame (28), with each of the plurality of cutter assemblies (34) having a respective motor (44) operatively attached to a respective disc (94) for rotating the disc (94);
generating a respective control signal for each of the plurality of cutter assemblies (34), with a cutter controller (50), to control a commanded rotational speed of the respective motor (44) of each of the plurality of cutter assemblies (34), wherein the respective control signal for one of the plurality of cutter assemblies (34) is different than the respective control signal for another one of the plurality of cutter assemblies (34).

12. The method set forth in claim 11, further comprising receiving a user input with an input device (78) of the cutter controller (50), wherein the user input defines the commanded rotational speed of the respective motor (44) of the one of the plurality of cutter assemblies (34).

13. The method set forth in claim 11 or 12, further comprising sensing data related to an operating condition of one of the plurality of cutter assemblies (34) with a sensor (72), and communicating the sensed data to a cutter controller (50).

14. The method according to at least one of the preceding claims 11 to 13, further comprising defining the commanded rotational speed of the respective motor (44) of each of the plurality of cutter assemblies (34) based on the sensed data related to the operating condition of the one of the plurality of cutter assemblies (34).

15. The method according to at least one of the preceding claims 11 to 14, further comprising adjusting a vertical position of one of the plurality of cutter assemblies (34) relative to the frame (28) and the other of the plurality of cutter assemblies (34).
